# EUROPEAN PATENT APPLICATION

(11) **EP 2 124 195 A1**
(43) Date of publication of application: **25.11.2009**
(21) Application number: 07706599.3
(22) Date of filing: 11.01.2007
(51) Int. Cl.: G06T 15/00

(54) **ANTIALIASING DEVICE**

(71) Applicant: Mitsubishi Electric Corporation, Chiyoda-ku Tokyo 100-8310 (JP)
(72) Inventor: TOMARU, Yoshihiro, Tokyo 100-8310 (JP); HARADA, Masayuki, Tokyo 100-8310 (JP); NAITO, Manami, Tokyo 100-8310 (JP)
(74) Representative: Pfenning, Meinig & Partner GbR
(86) International application number: PCT/JP2007/050252
(87) International publication number: WO 2008/084543

(57) **Abstract**

Antialiasing selection condition data 200 are inputted to an antialiasing selection condition data input means 3. An antialiasing method determining means 5 determines an antialiasing method corresponding to data to be drawn on the basis of the antialiasing selection condition data 200. An antialiasing method selecting means 6 selects data about the determined antialiasing method from antialiasing method data 300 inputted to an antialiasing method data input means 4. An antialiasing processing means 7 performs an antialiasing process on the data to be drawn by using the antialiasing method data selected by the antialiasing method selecting means 6.

## Description

### Field of the Invention

The present invention relates to an antialiasing apparatus which performs an antialiasing process of changing the outline of an object in drawing data smoothly.

### Background of the Invention

A conventional antialiasing method includes the steps of providing certain selection conditions, e.g., a color plate, a pixel value, and a region for rasterized data, and performing an antialiasing process on a predetermined portion selectively (for example, refer to patent reference 1).
More specifically, in a case in which, for example, a region having coordinates x=100 to 200 and y=300 to 400 is defined, as the selection conditions, for rasterized image data, the antialiasing process is performed on only pixels whose x and y coordinates fall within the above-mentioned region. Because the antialiasing process according to this method is performed on only predetermined positions, there is provided an advantage of being able to improve the efficiency of the antialiasing process and greatly reduce the time required to perform the antialiasing process.

[Patent reference 1] JP,11-96347,A

However, the above-mentioned conventional antialiasing method determines whether to perform the antialiasing process on predetermined positions according to a selected region. That is, a problem is that because the above-mentioned conventional antialiasing method has the step of simply setting up either one extreme of performing the antialiasing process or the other extreme of not performing the antialiasing process, the above-mentioned conventional antialiasing method does not necessarily perform an antialiasing process suitable for data to be drawn, e.g., makes a boundary between an antialiased portion and a non-antialiased portion remarkably noticeable.

The present invention is made in order to solve the above-mentioned problem, and it is therefore an object of the present invention to provide an antialiasing apparatus which can perform an antialiasing process suitable for data to be drawn.

### Disclosure of the Invention

An antialiasing apparatus in accordance with the present invention inputs antialiasing selection condition data indicating which antialiasing method is to be selected for each data to be drawn from among a plurality of antialiasing methods by using an antialiasing selection condition data input means, and an antialiasing processing means performs an antialiasing process on each data to be drawn on a basis of an antialiasing method corresponding to the antialiasing selection condition data. Therefore, the antialiasing apparatus in accordance with the present invention can perform the antialiasing process by making the antialiasing process suitable for data to be drawn.

### Brief Description of the Figures

[Fig. 1] Fig. 1 is a configuration diagram showing an antialiasing apparatus in accordance with Embodiment 1 of the present invention;
[Fig. 2] Fig. 2 is an explanatory drawing showing an antialiasing method which the antialiasing apparatus in accordance with Embodiment 1 of the present invention uses; [Fig. 3] Fig. 3 is an explanatory drawing showing z comparison of the antialiasing apparatus in accordance with Embodiment 1 of the present invention;
[Fig. 4] Fig. 4 is a flow chart showing the operation of the antialiasing apparatus in accordance with Embodiment 1 of the present invention;
[Fig. 5] Fig. 5 is a configuration diagram showing an antialiasing apparatus in accordance with Embodiment 2 of the present invention;
[Fig. 6] Fig. 6 is an explanatory drawing showing an antialiasing method which the antialiasing apparatus in accordance with Embodiment 2 of the present invention uses; and
[Fig. 7] Fig. 7 is a flow chart showing the operation of the antialiasing apparatus in accordance with Embodiment 2 of the present invention.

### Preferred Embodiments of the Invention

Hereafter, in order to explain this invention in greater detail, the preferred embodiments of the present invention will be described with reference to the accompanying drawings.

### Embodiment 1.

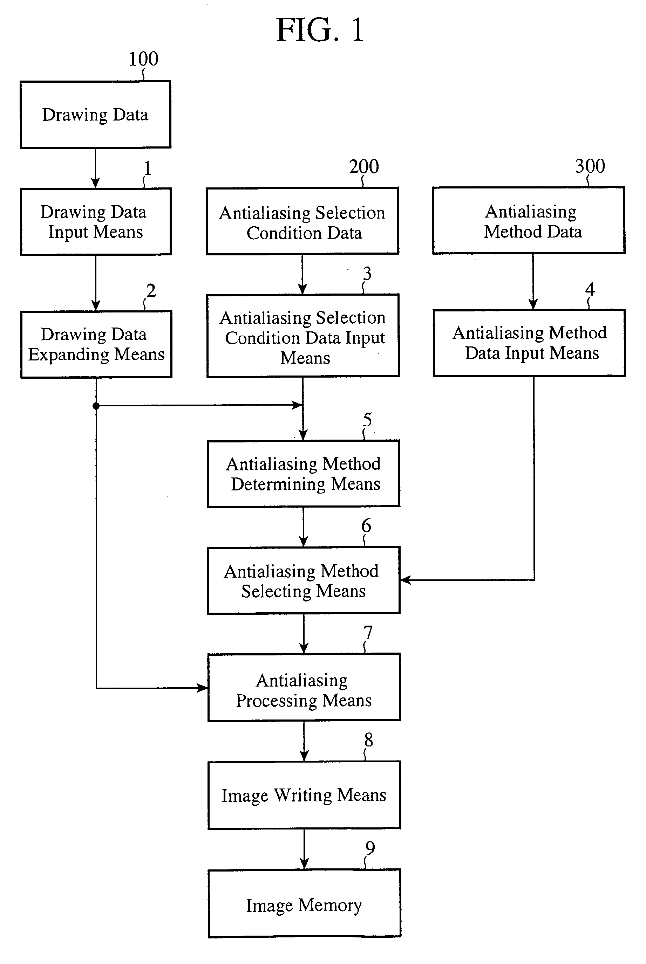

Fig. 1 is a configuration diagram showing an antialiasing apparatus in accordance with Embodiment 1 of the present invention.
The antialiasing apparatus shown in the figure is provided with a drawing data input means 1, a drawing data expanding means 2, an antialiasing selection condition data input means 3, an antialiasing method data input means 4, an antialiasing method determining means 5, an antialiasing method selecting means 6, an antialiasing processing means 7, an image writing means 8, and an image memory 9.

The drawing data input means 1 acquires drawing data 100, such as a plurality of polygon data (data to be drawn), the drawing data expanding means 2 expands the drawing data 100, such as a plurality of polygon data, which are acquired from the drawing data input means 1, into each polygon data, the antialiasing selection condition data input means 3 acquires antialiasing selection condition data 200 which are data about conditions for applying antialiasing selectively, and the antialiasing method data input means 4 acquires antialiasing method data 300 which are data about a plurality of antialiasing methods. The antialiasing method determining means 5 determines one antialiasing method from the antialiasing method data 300 indicating a set of the plurality of antialiasing methods on the basis of individual drawing data from the drawing data expanding means 2 and the antialiasing selection condition data 200 from the antialiasing selection condition data input means 3, and outputs an antialiasing method number, the antialiasing method selecting means 6 selects the antialiasing method from the antialiasing method number outputted from the antialiasing method determining means 5, the antialiasing processing means 7 performs an antialiasing process on the individual drawing data from the drawing data expanding means 2 by using the antialiasing method acquired by the antialiasing method selecting means 6, and the image writing means 8 writes the image data processed by the antialiasing processing means 7 in the image memory 9.

The antialiasing apparatus in accordance with the present invention is implemented by a computer, and the above-mentioned drawing data expanding means 2, the above-mentioned antialiasing method determining means 5, the above-mentioned antialiasing method selecting means 6, the above-mentioned antialiasing processing means 7, and the above-mentioned image writing means 8 are comprised of pieces of software corresponding to their respective functions, and some pieces of hardware, such as a CPU and a memory used for carrying out the pieces of software.

Next, the operation of the antialiasing apparatus in accordance with Embodiment 1 will be explained.
In this Embodiment, the drawing data 100 are a set of two polygon data, and polygon numbers 1 and 2 are given to these polygon data, respectively. The antialiasing selection condition data 200 are condition determination data about the two polygons, and the antialiasing method data 300 include data about two antialiasing methods. Numbers 1 and 2 are given to these two antialiasing methods, respectively.

In a case in which the antialiasing selection condition data 200 are formed in the form of a list of (polygon numbers, antialiasing method numbers), (1, 1) and (2, 2) are concrete condition data. Furthermore, for example, it is assumed that the antialiasing method data 300 are (4 sample antialiasing method data) and (6 sample antialiasing method data).

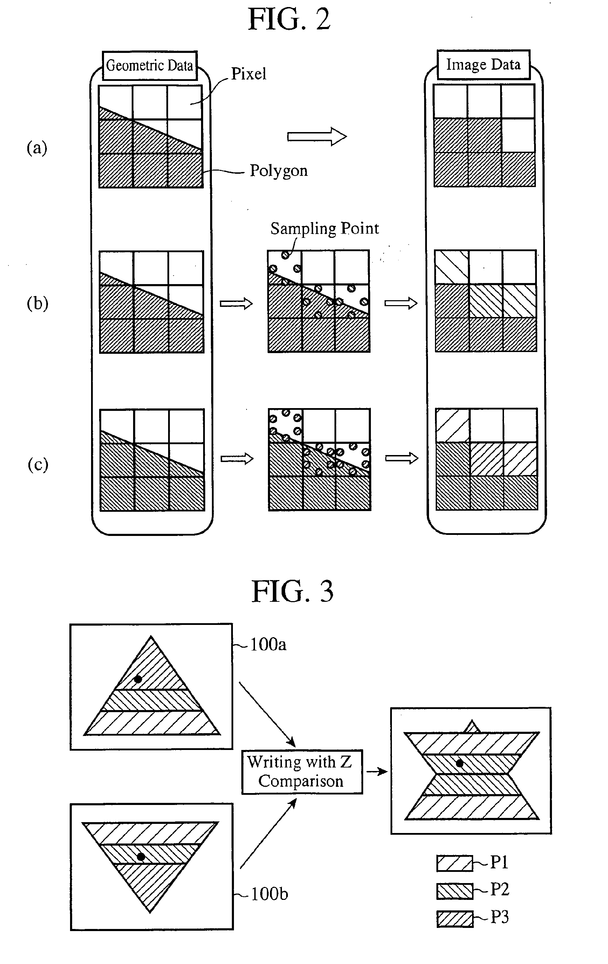

Fig. 2 is an explanatory drawing of the antialiasing method data 300, and shows the 4 sample antialiasing method and the 6 sample antialiasing method.
(a) in the view shows that the antialiasing apparatus writes geometric data into image data without performing any antialiasing process. Generally, the color of a pixel is determined according to whether a polygon covers the pixel's center. (b) in the view shows an example of the 4 sample antialiasing, and, in this example, the antialiasing apparatus sets up four points in each pixel as sampling points, and judges whether a polygon covers each of the points so as to determine each pixel's color from the percentage of points covered by the polygon. In this case, because three of the four points of a center pixel are covered by a polygon, the pixel's color is multiplied by 3/4 so as to determine its new pixel color. In the 6 sample antialiasing shown in (c) of the view, six sampling points, instead of four points, are defined in each pixel. By changing each pixel's color according to the percentage of points in each pixel covered by a polygon, the appearance of aliasing, which is called jaggy, can be reduced compared with a case of not performing any antialiasing process. Furthermore, the writing process performed by the image writing means 8 accompanies a z comparison process.

Fig. 3 is an explanatory drawing showing the z comparison.
The z comparison is comparison using depth which is called a degree of depth, and shows that a pixel having a larger degree of depth is located at a deeper depth and a pixel having a smaller degree of depth is located at a shallower depth. In a case of writing two polygons by using the z comparison, the image writing means compares the degrees of depth of two pixels which are to be written in the same image memory 9 with each other, and writes the data about one of them located at a shallower depth, i.e., one having a smaller degree of depth in the image memory. In the figure, the degree of depth of each polygon is expressed by a pattern of hatch lines, and a pattern P1 shows that the degree of depth is small, a pattern P2 shows that the degree of depth is medium, and a pattern P3 shows that the degree of depth is large. The filled points in the figure show a point having the same coordinates in the two polygons, and, because the point in the second polygon data 100b has a smaller degree of depth of than that of the point in the first polygon data 100a, one of them which is to be written in the image memory 9 after the z comparison is carried out is the point in the second polygon data 100b.

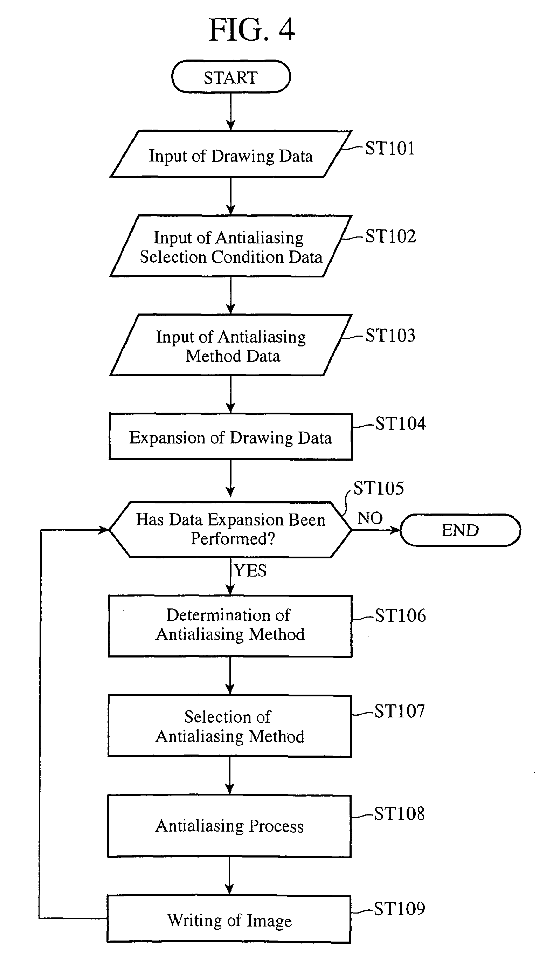

Fig. 4 is a flow chart showing the operation of the antialiasing apparatus in accordance with Embodiment 1.
In the flow of this Embodiment, the antialiasing apparatus acquires the drawing data 100 including the two polygons by using the drawing data input means 1 first (step ST101), acquires the antialiasing selection condition data 200 by using the antialiasing selection condition data input means 3 (step ST102), and acquires the antialiasing method data 300 including the two antialiasing methods by using the antialiasing method data input means 4 (step ST103) . After the antialiasing apparatus completes the input of those data, the drawing data expanding means 2 expands the acquired drawing data 100 which consist of the two polygons into the first polygon data and the second polygon data, and outputs the first and second polygon data one by one (steps ST104 and ST105) . In this case, the drawing data expanding means outputs the first polygon data first.

Next, the antialiasing method determining means 5 determines an antialiasing method number for determining an antialiasing method by using the antialiasing selection condition data 200 which are inputted to the antialiasing selection condition data input means 3 (step ST106). Because the antialiasing selection condition data 200 are (1, 1) and (2, 2) and the polygon data are the first one, and therefore the polygon data meet the criterion of (1, 1), the antialiasing method determining means determines the antialiasing method number as 1.

Next, the antialiasing method selecting means 6 selects and reads the antialiasing method to be applied to the first polygon data from the antialiasing method data 300 outputted from the antialiasing method data input means 4 on the basis of the antialiasing method number which is the output of the antialiasing method determining means 5 (step ST107). In this case, because the antialiasing method data 300 are (4 sample antialiasing method data) and (6 sample antialiasing method data) and the antialiasing method number which is the output of the antialiasing method determining means 5 is 1, the antialiasing method selecting means selects and reads the first method, i.e., the 4 sample antialiasing method.

Next, the antialiasing processing means 7 performs the antialiasing process on the target polygon by using the antialiasing method specified by the output of the antialiasing method selecting means 6 (step ST108). In this case, the antialiasing processing means performs the 4 sample antialiasing on the first polygon data.

Next, the image writing means 8 carries out a process of writing the data on which the antialiasing process has been performed in the image memory 9 (step ST109). After completing this writing process, the antialiasing apparatus returns to step ST105, and then outputs the second polygon data by using the drawing data expanding means 2. After that, the antialiasing method determining means 5 determines the antialiasing method number, like in the case of the first polygon data (step ST106). In this case, because the polygon number is 2 and the second polygon data meet (2, 2), the antialiasing method determining means determines the antialiasing method number as 2. Next, the antialiasing method selecting means 6 selects and reads the 6 sample antialiasing method whose antialiasing method number is 2 (step ST107). Next, the antialiasing processing means 7 performs the antialiasing process on the second polygon data by using the 6 sample antialiasing method (step ST108). Furthermore, the image writing means 8 writes the antialiased second polygon data in the image memory 9. At that time, after performing z comparison between the first polygon data and the second polygon data, the image writing means performs the process of writing the antialiased second polygon data in the image memory 9 (step ST109). After that, the antialiasing apparatus returns to step ST105, but ends the antialiasing processing because there exist no more data to be expanded.

In above-mentioned Embodiment 1, even when the drawing data 100 are, instead of three-dimensional polygon data, two-dimensional character or image data, there is no problem in antialiasing these two-dimensional character or image data. Furthermore, the number of data to be antialiased is not limited. For example, as an example of applying the antialiasing to specific character data, there can be a case in which the antialiasing apparatus does not perform the antialiasing process on all characters uniformly, but performs the antialiasing process on some characters selectively so as to present beautiful characters and rough characters properly. Thereby, an advantage of emphasizing characters can be expected. In addition, as an example of application to specific image data, there can be a case in which the antialiasing apparatus performs the antialiasing process on images selectively to make them have different levels of beauty, like in the case of character data. As a result, an advantage of emphasizing specific images can be expected, and, moreover, the computational efficiency can be improved.

Furthermore, the input antialiasing method data 300 are not limited to the application to the 4 and 6 sample antialiasing methods, but can be applied to all methods presented by the user. Furthermore, the number of methods presented by the user is not limited. The image writing means 8 can carry out an overwriting process, an additionally writing process, or the like instead of the writing process with z comparison.

As mentioned above, the antialiasing apparatus in accordance with Embodiment 1 includes the antialiasing selection condition data input means for inputting condition data indicating which antialiasing method is to be selected for each data to be drawn from among a plurality of antialiasing methods, the antialiasing method selecting means for selecting one of the plurality of antialiasing methods on the basis of the condition data inputted by the antialiasing selection condition data input means; and the antialiasing processing means for performing an antialiasing process on the data to be drawn on the basis of the method selected by the antialiasing method selecting means. Therefore, the antialiasing apparatus in accordance with Embodiment 1 can perform the antialiasing process by making the antialiasing process suitable for data to be drawn.

Furthermore, in the antialiasing apparatus in accordance with Embodiment 1, the data to be drawn are 3D polygon data. Therefore, the antialiasing apparatus in accordance with Embodiment 1 can perform an optimal antialiasing process on each polygon data, e.g., can change the level of antialiasing arbitrarily for each target polygon data.

As an alternative, in the antialiasing apparatus in accordance with Embodiment 1, the data to be drawn are character data. Therefore, the antialiasing apparatus in accordance with Embodiment 1 can perform an optimal antialiasing process on each character data, e.g., can provide an advantage of emphasizing characters.

As an alternative, in the antialiasing apparatus in accordance with Embodiment 1, the data to be drawn are image data. Therefore, the antialiasing apparatus in accordance with Embodiment 1 can perform an optimal antialiasing process on each specific image data, e.g., can provide an advantage of emphasizing specific images.

### Embodiment 2.

The antialiasing apparatus in accordance with above-mentioned Embodiment 1 is constructed in such a way as to be able to select an antialiasing method for each data to be drawn of drawing data 100. In contrast, Embodiment 2 is an example of selectively changing an antialiasing method in an image to be drawn.

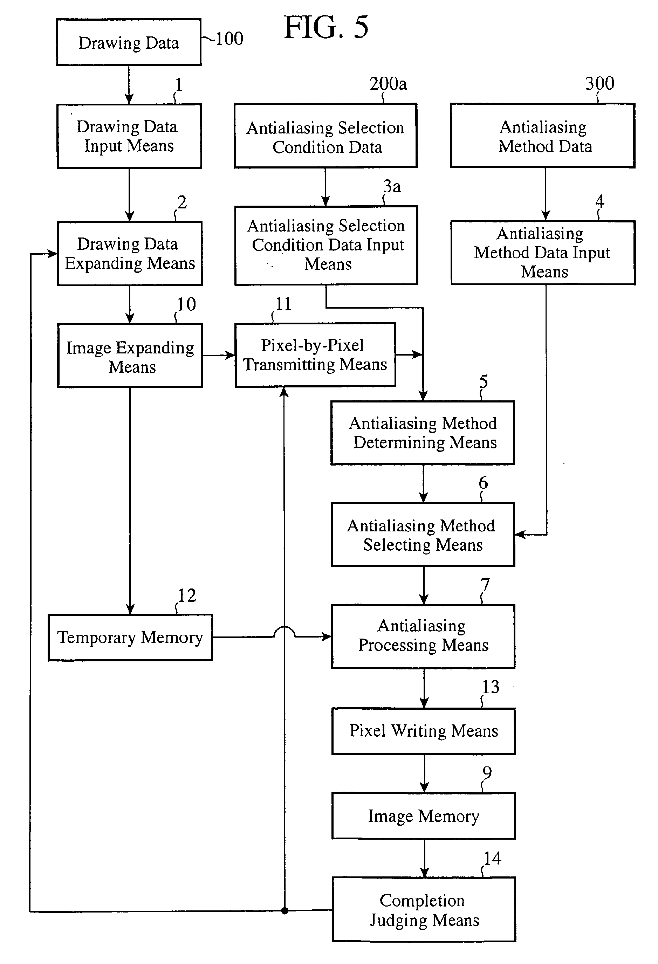

Fig. 5 is a configuration diagram of an antialiasing apparatus in accordance with Embodiment 2.
The antialiasing apparatus shown in the figure is provided with a drawing data input means 1, a drawing data expanding means 2, an antialiasing selection condition data input means 3a, an antialiasing method data input means 4, an antialiasing method determining means 5, an antialiasing method selecting means 6, an antialiasing processing means 7, an image memory 9, an image expanding means 10, a pixel-by-pixel transmitting means 11, a temporary memory 12, a pixel writing means 13, and a completion judging means 14. Because the structures of the components other than the antialiasing selection condition data input means 3a, the image expanding means 10, the pixel unit transmitting means 11, the temporary memory 12, the pixel writing means 13, and the completion judging means 14 are the same as those in accordance with Embodiment 1, the same reference numerals are given to the corresponding components and the explanation of these components will be omitted hereafter.

The antialiasing selection condition data input means 3a inputs antialiasing selection condition data 200a indicating which antialiasing method is to be selected for each pixel of the drawing data 100 from among a plurality of antialiasing methods indicated by the antialiasing method data 300. The image expanding means 10 expands each individual drawing data from the drawing data expanding means 2 into image data, the pixel unit transmitting means 11 transmits the image data from the image expanding means 10 pixel by pixel, the temporary memory 12 is a storage area for storing the image data from the image expanding means 10, the pixel writing means 13 writes pixel data on which antialiasing has been performed by the antialiasing processing means 7 in the image memory 9, and the completion judging means 14 judges whether the writing of the pixel data in the image memory 9 has been completed for all the pixels.

Next, the operation of the antialiasing apparatus in accordance with Embodiment 2 will be explained.
Embodiment 2 will be explained by assuming that the drawing data 100 are a set of two polygon data (data to be drawn), the antialiasing selection condition data 200a are antialiasing condition determination data about each pixel, and the antialiasing method data 300 include data about two antialiasing methods. Furthermore, it is assumed that the antialiasing selection condition data 200a are a list of (x and y coordinates region condition, antialiasing method number). Concretely, the antialiasing selection condition data 200a are, for example, condition data like (x<100, 1) and (x>=100, 2). Furthermore, it is assumed that the antialiasing method data 300 are (first antialiasing method data) and (second antialiasing method data). In this embodiment, each of the first antialiasing method and the second antialiasing method can be implemented in the same manner that each of them is implemented in Embodiment 1, though each of the first antialiasing method and the second antialiasing method can be implemented in such a different manner as shown below.

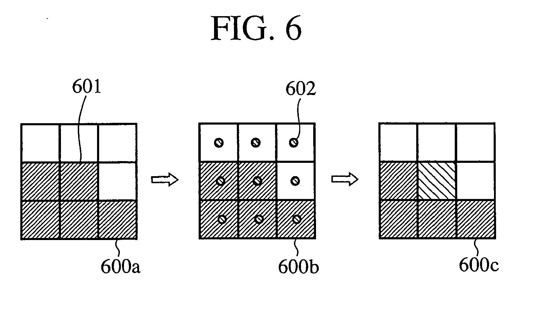

Fig. 6 is an explanatory drawing showing the first antialiasing method for use in Embodiment 2.
This method includes the step of performing antialiasing by multiplying the color of a target pixel by the percentage of a total of nine pixels including the target pixel and 8 neighboring pixels which are covered by a polygon. In Fig. 6, image data 600a show image data not-yet-to-be-antialiased and target pixels 601, and image data 600b show sampling points 602 in the nine pixels. Furthermore, image data 600c show the image data which have been antialiased.

As the second antialiasing method, for example, a method of performing antialiasing by performing sampling of a total of five points including a central pixel and four pixels on the upper right hand side, the lower right hand side, the upper left hand side, and the lower left hand side of the central pixel, and multiplying the color of a target pixel by the percentage of the total of five points which are covered by a polygon can be used. A writing process carried out by the pixel writing means 13 is writing with z comparison, like in the case of Embodiment 1.

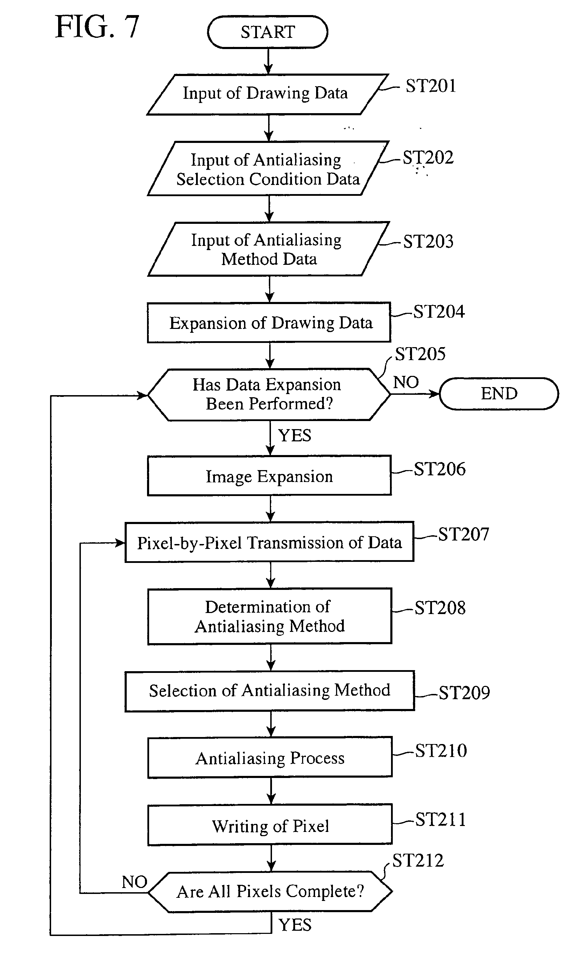

Fig. 7 is a flow chart showing the operation of the antialiasing apparatus in accordance with Embodiment 2.
In the flow of this Embodiment, the antialiasing apparatus acquires the drawing data 100 including the two polygons by using the drawing data input means 1 first (step ST201), acquires the antialiasing selection condition data 200 by using the antialiasing selection condition data input means 3a (step ST202), and acquires the antialiasing method data 300 including the two antialiasing methods by using the antialiasing method data input means 4 (step ST203). After the antialiasing apparatus completes the input of those data, the drawing data expanding means 2 expands the acquired drawing data 100 which consist of the two polygons into the first polygon data and the second polygon data (steps ST204 and ST205), and outputs the first and second polygon data one by one.
In this case, the drawing data expanding means outputs the first polygon data first.

Next, the image expanding means 10 outputs the first polygon data as image data. At that time, the image data are written in the temporary memory 12. Next, the pixel-by-pixel transmitting means 11 divides the image data from the image expanding means 10 into image data in units of each pixel, and then transmits data about a pixel value, coordinates, a depth value, and so on (step ST207). The antialiasing method determining means 5 then determines the number of an antialiasing method which the antialiasing apparatus applies to each pixel which has been transmitted thereto and which has a requirement as the inputted antialiasing selection condition data 200 (step ST208). Because the antialiasing selection condition data 200a are (x<100, 1) and (x>=100, 2), the antialiasing method determining means outputs 1 as the antialiasing method number if the x-coordinate of each pixel is smaller than 100, whereas if the x-coordinate of each pixel is equal to or larger than 100, the antialiasing method determining means outputs 2 as the antialiasing method number.

Next, the antialiasing method selecting means 6 selects and reads the antialiasing method to which the antialiasing method number which is the output from the antialiasing method determining means 5 is given from among the plurality of antialiasing methods indicated by the inputted antialiasing method data 300 (step ST209) . Because the antialiasing method data 300 are (the first antialiasing method data) and (the second antialiasing method data), if the antialiasing method number is 1, the antialiasing method selecting means selects the first antialiasing method, whereas if the antialiasing method number is 2, the antialiasing method selecting means selects the second antialiasing method. More specifically, if the x-coordinate of each pixel is smaller than 100, the antialiasing method selecting means selects the first antialiasing method, whereas if the x-coordinate of each pixel is equal to or larger than 100, the antialiasing method selecting means selects the second antialiasing method.

Next, the pixel writing means 13 performs the antialiasing process on each pixel data by using the antialiasing method selected by the antialiasing method selecting means 6 (step ST210), and then performs a process of writing each pixel data with z comparison in the image memory 9 (step ST211). At that time, when carrying out the antialiasing process, the antialiasing apparatus performs the antialiasing process by using the temporary memory 12 which stores data about neighboring pixels. After the pixel writing means completes the writing process, the completion judging means 14 judges whether all the pixels of the image data which have been expanded by the image expanding means 10 have been processed (step ST212), and, when all the pixels of the image data have not been processed, the antialiasing apparatus returns to step ST207 and the pixel unit transmitting means 11 transmits the next pixel data, whereas when all the pixels of the image data have been processed, the antialiasing apparatus returns to step ST205 and the drawing data expanding means 2 sends the next individual drawing data. If there are no more individual drawing data, the antialiasing apparatus ends the antialiasing processing.

The antialiasing selection condition data 200a are not limited to data about conditions about x and y coordinates, and, of course, the antialiasing selection condition data can be data about conditions about pixel values or depth data. For example, as an example in which the antialiasing apparatus changes the antialiasing method according to pixel values, there can be a case in which there is provided a condition that the antialiasing apparatus performs fine antialiasing on a portion having high brightness in which jaggy easily becomes conspicuous, and conversely performs rough antialiasing on other portions. By doing in this way, the antialiasing apparatus can produce a display on which antialiasing is performed in its appearance. Furthermore, the antialiasing apparatus can speed up the antialiasing processing by switching between the fine antialiasing and the rough antialiasing properly. As an example of changing the antialiasing method according to depth data, there can be a case in which the antialiasing apparatus performs fine antialiasing on an object having a small depth value, i.e., an object placed frontwardly in 3D space, and conversely performs rough antialiasing on another object having a large depth value which is placed relatively backwardly. By doing in this way, the antialiasing apparatus can produce a display on which antialiasing is beautifully performed on an object placed frontwardly which needs to be displayed finely, and rough antialiasing is performed on an object placed backwardly, though this roughly antialiased object is not noticeable in appearance. By performing this antialiasing processing, the antialiasing apparatus can produce a display on which antialiasing is performed in its appearance, and can speed up the antialiasing processing by switching between the fine antialiasing and the rough antialiasing properly.

Furthermore, the input antialiasing method data 300 are not limited to the application to the first antialiasing method, but can be applied to all methods presented by the user. Furthermore, the number of methods presented by the user is not limited. The pixel writing means 13 can carry out an overwriting process, an additionally writing process, or the like instead of the writing process with z comparison.

As mentioned above, the antialiasing apparatus in accordance with Embodiment 2 includes the antialiasing selection condition data input means for inputting condition data indicating which antialiasing method is to be selected for each pixel from among a plurality of antialiasing methods, the antialiasing method selecting means for selecting one of the plurality of antialiasing methods for each pixel of data to be drawn on the basis of the condition data inputted by the antialiasing selection condition data input means, and the antialiasing processing means for performing an antialiasing process on each pixel of the data to be drawn on a basis of the method selected by the antialiasing method selecting means. Therefore, the antialiasing apparatus can determine a region to which the antialiasing apparatus can apply the antialiasing for each pixel, and can perform the antialiasing process by making the antialiasing process suitable for data to be drawn.

Furthermore, in the antialiasing apparatus in accordance with Embodiment 2, the antialiasing selection condition data input means inputs a selection condition for each pixel having specific coordinates. Therefore, the antialiasing apparatus can change the level of the antialiasing arbitrarily for each region, and can perform the antialiasing on the drawing data effectively and can also achieve an improvement in the speed of the processing.

In addition, in the antialiasing apparatus in accordance with Embodiment 2, the antialiasing selection condition data input means inputs a selection condition for each pixel having a specific pixel value. Therefore, the antialiasing apparatus can perform the antialiasing on the drawing data effectively and can also achieve an improvement in the speed of the processing.

Furthermore, in the antialiasing apparatus in accordance with Embodiment 2, the antialiasing selection condition data input means inputs a selection condition for each pixel having a specific depth value. Therefore, the antialiasing apparatus can perform the antialiasing on the drawing data effectively and can also achieve an improvement in the speed of the processing.

### Industrial Applicability

As mentioned above, the antialiasing apparatus in accordance with the present invention relates to a structure of selecting one antialiasing method from among a plurality of antialiasing methods, and carries out an antialiasing process on drawing data, and is suitable for use in an image display apparatus.

## Claims

1. An antialiasing apparatus comprising:
an antialiasing selection condition data input means for inputting condition data indicating which antialiasing method is to be selected for each data to be drawn from among a plurality of antialiasing methods;
an antialiasing method selecting means for selecting one antialiasing method from among said plurality of antialiasing methods on a basis of the condition data inputted by said antialiasing selection condition data input means; and
an antialiasing processing means for performing an antialiasing process on said data to be drawn on a basis of the method selected by said antialiasing method selecting means.

2. The antialiasing apparatus according to claim 1, **characterized in that** the data to be drawn are 3D polygon data.

3. The antialiasing apparatus according to claim 1, **characterized in that** the data to be drawn are character data.

4. The antialiasing apparatus according to claim 1, **characterized in that** the data to be drawn are image data.

5. An antialiasing apparatus comprising:
an antialiasing selection condition data input means for inputting condition data indicating which antialiasing method is to be selected for each pixel from among a plurality of antialiasing methods;
an antialiasing method selecting means for selecting one of said plurality of antialiasing methods for each pixel of data to be drawn on a basis of the condition data inputted by said antialiasing selection condition data input means; and
an antialiasing processing means for performing an antialiasing process on each pixel of said data to be drawn on a basis of the method selected by said antialiasing method selecting means.

6. The antialiasing apparatus according to claim 5, **characterized in** the antialiasing selection condition data input means inputs a selection condition for each pixel having specific coordinates.

7. The antialiasing apparatus according to claim 5, **characterized in** the antialiasing selection condition data input means inputs a selection condition for each pixel having a specific pixel value.

8. The antialiasing apparatus according to claim 5, **characterized in** the antialiasing selection condition data input means inputs a selection condition for each pixel having a specific depth value.
